## Europäisches Patentamt
## European Patent Office
## Office européen des brevets

(19)

(11) Veröffentlichungsnummer: **0 319 740**
**B1**

(12) **EUROPÄISCHE PATENTSCHRIFT**

(45) Veröffentlichungstag der Patentschrift: **16.01.91**

(51) Int. Cl.$^5$: **C 02 F 1/72, C 22 B 43/00, C 22 B 3/00**

(21) Anmeldenummer: **88118930.2**

(22) Anmeldetag: **14.11.88**

(54) **Verfahren zur Entgiftung von Abwässern, die elementares Quecksilber enthalten.**

(30) Priorität: **11.12.87 DE 3742063**

(43) Veröffentlichungstag der Anmeldung:
**14.06.89 Patentblatt 89/24**

(45) Bekanntmachung des Hinweises auf die Patenterteilung:
**16.01.91 Patentblatt 91/03**

(84) Benannte Vertragsstaaten:
**AT BE CH DE ES FR GB GR IT LI NL SE**

(56) Entgegenhaltungen:
CH-A- 186 856
CH-A- 625 491
DE-A-2 352 856
LU-A- 39 159

PATENT ABSTRACTS OF JAPAN, Band 8, Nr. 34 (C-210)(1471), 15. Februar 1984; & JP-A-58 196 888

PATENT ABSTRACTS OF JAPAN, Band 4, Nr. 144 (C-27)(626), 11. Oktober 1980, Seite 163 C27; & JP-A-55 94 679

(73) Patentinhaber: **VARTA Batterie Aktiengesellschaft**
**Am Leineufer 51**
**D-3000 Hannover 21 (DE)**

(72) Erfinder: **Krey, Winfried, Dr.Dipl.- Chem.**
**Wiesenweg 5**
**D-7090 Ellwangen (DE)**

(74) Vertreter: **Kaiser, Dieter Ralf, Dipl.-Ing.**
**Gundelhardtstrasse 72**
**D-6233 Kelkheim/Ts. (DE)**

(56) Entgegenhaltungen:
CHEMICAL ABSTRACTS, Band 107, Nr. 107, 1987, Seiten 405-406, Nr. 160577z, Columbus, Ohio, US; KOBAYASHI TOMIKI: "Oxidation of metallic mercury in aqueous solution by hydrogen peroxide and chloride"

PATENT ABSTRACTS OF JAPAN, Band 10, Nr. 235 (C-366)(2291), 14. August 1986; & JP-A-61 68 191

Courier Press, Leamington Spa, England.

## Beschreibung

Die Erfindung betrifft ein Verfahren zur Entgiftung von Abwässern, die elementares Quecksilber enthalten, durch Oxidation des Quecksilbers und nachfolgende Fällung als schwer lösliche Verbindung und/oder Extraktion des oxidierten Quecksilbers an einem Hg-selektiven Ionenaustauscher.

Im Rahmen der Aufbereitung und Reinigung von Industrieabwässern, beispielsweise von Batteriefabriken, aus der Chlor-Alkali-Elektrolyse und von Galvanikbetrieben, sind bereits verschiedene technische Verfahren bekannt, die speziell auf die Entfernung von Quecksilber als einem besonders toxischen Abfallprodukt abgestellt sind. Dabei wird meist davon ausgegangen, daß das Quecksilber in chemisch gebundener Form vorliegt, und je nach Art der wasserlöslichen Quecksilberverbindung und deren Konzentration im Abwasser erfolgt dann eine Abscheidung entweder als Sulfid oder, wenn die Quecksilberverunreinigung nur gering ist, z.B. als Adsorbat an einen Calziumhydroxidniederschlag, den man durch Zugabe von Calziumchlorid zu einem alkalischen Abwasser erhält und der darin vorhandene Schwermetalle, insbesondere Quecksilber, als Spurenfänger bindet.

Obwohl sich reines Quecksilber in Wasser nur in Spuren löst, können Industrieabwässer aus Batteriefabriken, aus der Chloralkalielektrolyse oder aus Galvanikbetrieben mit erheblichen Mengen elementaren Quecksilbers belastet sein. Metallisches Quecksilber läßt sich z.B. durch Verreiben mit Fett leicht emulgieren. Es liegt dann in den Abwässern hauptsächlich in kolloiddisperser Verteilung vor. Seine Entstehung in größeren Mengen kann auf Einwirkung von Reduktionsmitteln wie Hydrazin oder Natriumborhydrid zurückzuführen sein. Es kann sich aus feinstem Staub gebildet haben, der sich in grauen Wolken im Wasser verteilt, oder es kann von Schwebstoffen als Adsorbat mitgeführt werden. Schließlich kann das Abwasser Quecksilberdampf bis zur Sättigung aufgenommen haben.

Alles Quecksilber in diesen Zustandsformen, im folgenden summarisch als nullwertiges Quecksilber, Hg(O), bezeichnet, läßt sich dem Abwasser weder durch Fällung als schwerlösliche Verbindung noch durch Hg-selektive Ionenaustauscher entziehen. Um es daher in eine abtrennbare Form umzuwandeln, führt man eine Oxidation durch und fällt das Quecksilber anschließend als Sulfid aus. Als Oxidationsmittel ist im allgemeinen Hypochlorit in Gebrauch. Durch die Behandlung mit diesem Mittel findet jedoch in nachteiliger Weise nicht nur eine Aufsalzung der Abfallösung statt, sondern es können organische Stoffe chloriert werden, wodurch der Gehalt an adsorbierbaren organischen Halogenverbindungen (AOX-Wert) über künftig zu erwartende Grenzwerte ansteigen kann.

Die DE—AS 27 13 991 enthält einen Hinweis, daß auch eine Behandlung von wässrigen Lösungen, die Schadstoffe enthalten, mit Wasserstoffperoxid bekannt ist. Der Vorteil dieses Oxidationsmittels liegt darin, daß sein Reaktionsprodukt Wasser ist und daß es insofern eine wässrige Reaktionsmischung nicht mit fremden Umsetzungsprodukten belastet.

Die zitierte Druckschrift erwähnt ferner, daß bei der Oxidation mit Wasserstoffperoxid auch Katalysatoren eingesetzt werden. Mit der Pauschalierung "Schadstoffe" läßt sie jedoch völlig offen, welche speziellen Substanzen hier angesprochen sind.

Der Erfindung liegt daher die Aufgabe zugrunde, ein quecksilberspezifisches Verfahren zur Entgiftung von Abwässern, insbesondere solchen, in welchen Quecksilberdampf gelöst ist, anzugeben, welches nicht nur dessen gründliche Beseitigung ermöglicht, sondern auch keine anderweitigen belastenden Folgen für das Abwasser nach sich zieht und zudem billig ist.

Die Aufgabe wird erfindungsgemäß mit den im kennzeichnenden Teil des Anspruchs 1 angegebenen Mitteln gelöst.

Danach hat sich gezeigt, daß bei der an sich bekannten oxidierenden Behandlung des Abwassers mit Wasserstoffperoxid die Hinzuziehung eines Katalysators unerläßlich ist, weil $H_2O_2$ mit Quecksilberdampf sonst zu langsam reagiert, daß jedoch auch preiswerte Katalysatoren verfügbar sind, welche den Umsatz auf ein praxisgerechtes Maß beschleunigen.

Erfindungsgemäße Katalysatoren, die dies leisten, bestehen aus Verbindungen des Eisens oder Jods. Dabei ist es unerheblich, welche Wertigkeit das Eisen oder Jod in den jeweiligen Verbindungen besitzt, da niedere Wertigkeitsformen durch das Wasserstoffperoxid gegebenenfalls aufoxidiert werden, z.B. Eisen (II) zu Eisen (III), wenn Eisen z.B. als $FeSO_4$ eingesetzt wird. Überhaupt sind anorganische Eisenverbindungen die geeigneten Anwendungsformen im Falle des eisenhaltigen Katalysators.

Statt einer Jodverbindung, beispielsweise Jodid oder Jodat, kann auch elementares Jod als Katalysator verwendet werden; auch organische Verbindungen, z.B. Aminhydrojodide, stehen zur Wahl, sofern sich aus ihnen durch einen Redoxprozeß Jod freisetzen läßt.

Die Eisenverbindung ist in Abwässern mit pH-Werten oberhalb 5, d.h. in überwiegend neutralem bis schwach alkalischen Milieu, besonders wirksam und bereits in Mengen ab ca. 1 mg/1 bzw. 1 g Fe/m³ ausreichend. Das Abwasser wird daher vor dem Zufügen des $H_2O_2$ auf einen pH-Wert von 5 bis 10, vorzugsweise 7 bis 9 eingestellt. Solche pH-Bedingungen liegen bereits häufig vor, wenn der erfindungsgemäßen Oxidationsbehandlung eine Metallhydroxidfällung bei pH-Werten zwischen 6 und 9 mit anschließender Filtration vorausgegangen ist. In diesem Fall ist es besonders günstig, die Quecksilberoxidation in Gegenwart von z.B. $FeCl_3$ simultan mit der Metallhydroxidfällung durchzuführen. Durch die Filtration wird der Eisenkatalysator quantitativ aus der gegebenenfalls noch nachzureinigenden Lösung entfernt.

Eine Nachreinigung wird allein dadurch notwendig, daß die filtrierte Lösung noch überschüssiges

2

H₂O₂ enthält. Die schnelle Oxidation des Quecksilbers wird nämlich, selbst bei erfindungsgemäßer Anwendung der Katalysatoren, nur bei ausreichend großem Überschuß an H₂O₂ erzielt. Dabei gehört es auch bereits zum Stand der Technik, den H₂O₂-Überschuß mittels Redoxelektroden zu überwachen und verbrauchtes H₂O₂ durch eine automatische Dosiervorrichtung zu ersetzen.

Die problemlose Entfernung des nicht verbrauchten H₂O₂ gelingt erfindungsgemäß dadurch, daß es sich beim Kontakt mit Mangandioxid, indem das Abwasser durch eine Säule mit granuliertem Mangandioxid gepumpt wird, spontan katalytisch zu Wasser und Sauerstoff zersetzt. Da Mangandioxid in Wasser unlöslich ist, hat dieses Verfahren den großen Vorteil, daß weder das Abwasser zusätzlich mit Chemikalien belastet wird, noch die Reaktorsäule regeneriert werden muß.

Eine auf diese Weise von H₂O₂ befreite Abwasserlösung kann einer Nachreinigung von Quecksilberresten, die etwa bei der Fällung der Metallhydroxide nicht mit erfaßt oder als andere schwerlösliche Verbindungen nicht abgetrennt wurden, unterzogen werden, indem man sie über einen quecksilberselektiven Ionenaustauscher gibt. Ein solcher Ionenaustauscher kann auch die Entgiftung von Abwässern übernehmen, die außer dampfförmigem Quecksilber, (Hg(O)), keine weiteren, als Hydroxide oder Sulfide fällbaren Schwermetalle enthalten und ein saures bis neutrales Milieu aufweisen. In diesem Falle wird die H₂O₂-Behandlung vorzugsweise in Gegenwart einer anorganischen Jodverbindung und bei einem pH-Wert unterhalb 8,5 durchgeführt, weil eine Fällung einschließlich Filtration entfallen kann und keine Grenzwerte für Jod in Abwässern existieren, die zu einer Entfernung der ohnehin geringen katalytisch wirksamen Menge nach der Hg-Oxidation zwingen.

Die Abwasser-Lösung geht daher nach erfindungsgemäßer Zersetzung des unverbrauchten H₂O₂ an MnO₂ direkt an den Ionenaustauscher. Dieser ist so aufgebaut, daß er speziell Quecksilber aus dem Abwasser durch schwefelhaltige Gruppen, z.B. Thiolgruppen, in seinem Gerüst adsorbiert.

Die dem Abwasser zuzusetzende jodhaltige Katalysatormenge wird zweckmäßig so vorgelöst, daß 1 l Katalysator-Lösung, welche für 1 m³ Abwasser vorgesehen ist, 0,1 g bis 5 g Jod enthält.

Bei diesen Mengen geht man davon aus, daß das Abwasser an Quecksilber gesättigt ist. Es darf jedoch nicht außer acht gelassen werden, daß Jod mit Quecksilber schwer lösliche Reaktionsprodukte, insbesondere unlösliches Quecksilber (I)-jodid, bildet und nur ein Jodüberschuß, der nach Bindung des übrigen Jods auch an gegebenenfalls vorhandene höherwertige Ionen des Quecksilbers noch verblieben ist, in vollem Umfang seine erfindungsgemäße Katalysatorwirkung entfaltet. Als Jodiden wird nämlich durch das Wasserstoffperoxid Jod freigesetzt, welches in Konkurrenz zum H₂O₂ nunmehr selbst elementares Quecksilber bis zum Hg (II) zu oxidieren vermag, wobei es zur sofortigen Ausscheidung von Hg₂J₂ bzw. HgJ₂ kommt. Eine Ausfällung unterbleibt jedoch, weil die Jodide infolge der geringen Konzentration vermutlich in einer kolloiddispersen Verteilung vorliegen und so im großen und ganzen, von einer in der MnO₂-Säule adsorptiv festgehaltenen geringen Menge abgesehen, mit der Abwasserlösung in den Ionenaustauscher gelangen. Dort wird alles bis dahin gebundene Jod gegen die stärker quecksilberaffinen Schwefelgruppen ausgetauscht, so daß das Jod diese letzte Behandlungsstufe des Abwassers wieder in seiner ursprünglich eingesetzten Form und einer dabei nicht wesentlich veränderten Menge wieder verläßt.

Die beschleunigende Wirkung erfindungsgemäßer Katalysatoren auf die Oxidation von Quecksilber in Wasser mit Wasserstoffperoxid läßt sich sehr deutlich aus den Zahlenwerten der beiden nachstehenden Tabellen ablesen. Als Maß für die Oxidationsgeschwindigkeit wurde jeweils eine Halbwertzeit (HWZ) ermittelt, nämlich die Reaktionszeit bei Raumtemperatur bis zur Oxidation der Hälfte der anfänglich vorhandenen Hg(O)-Menge. Diese Zeit zählt, wie aus den Tabellen ersichtlich, nach Stunden, wenn der Katalysator ganz fehlt, nur in unzureichender Menge vorhanden ist oder wenn der pH-Wert außerhalb eines bevorzugten Bereiches liegt, dagegen nach Minuten, wenn alle erfindungsgemäßen Bedingungen optimal erfüllt sind. Dabei zeigt sich insbesondere auch die vorteilhafte Wirkung des Eisenkatalysators im überwiegend alkalischen Gebiet, während der Jod-Katalysator eher im neutralen bis sauren Gebiet das Mittel der Wahl ist.

Alle Versuchslösungen wiesen einen H₂O₂-Überschuß von 0,24 g/l auf. Die Ausgangskonzentration an Hg(O) betrug stets ca. 130 mg/cm³.

Tabelle 1

Hg(O)-Oxidation mit $H_2O_2$ in Gegenwart von Fe (III) als Katalysator

| Fe (III) (mg/l) | pH-Wert | HWZ (h) |
|---|---|---|
| 0 | 7,4 | > 24 |
| 0,4 | 9,0 | > 24 |
| 1,0 | 9,0 | 1,5 |
| 4,0 | 9,0 | 0,7 |
| 4,0 | 6,1 | 0,7 |
| 4,0 | 3,85 | > 24 |

Tabelle 2

Hg(O)-Oxidation mit $H_2O_2$ in Gegenwart von Jodid als Katalysator

| $I^-$ (mg/l) | pH-Wert | HWZ (h) |
|---|---|---|
| 0 | 7,4 | > 24 |
| 0,08 | 5,0 | ~ 15 |
| 0,4 | 9,1 | ~ 10 |
| 0,4 | 8,7 | 4,5 |
| 0,4 | 7,53 | 0,4 |
| 0,4 | 7,35 | 0,18 |
| 0,4 | 6,5 | 0,17 |
| 0,4 | 5,0 | 0,15 |
| 0,4 | 3,7 | 0,15 |

Konkrete Anweisungen für ein erfindungsgemäßes Handeln enthalten die folgenden Beispiele:

Beispiel 1

5 m³ Hg(O)-haltiges Abwasser werden mit 100 ml einer 30 %igen FeCl₃-Lösung versetzt und mit Säure oder Kalkmilch auf pH 7 bis 9 eingestellt. Dann werden 4 l einer 30 %igen $H_2O_2$-Lösung hinzugefügt und unter automatischer Kontrolle des $H_2O_2$-Überschusses 4 h lang oxidiert. Nun wird der $H_2O_2$-Überschuß durch Zusatz einer Eisen(II)-sulfat-Lösung bis zum Sprung des Redoxpotentials reduziert.

Nach Fällung des jetzt in oxidierter Form vorliegenden Quecksilbers mit einem geeigneten Fällungsmittel, z.B. dem Natriumsalz des Trimercapto-S-triazins (als "TMT 15" der Degussa AG, Frankfurt/ Main, im Handel), wird das Abwasser über eine Filterkammerpresse filtriert und kann direkt in die Kanalisation oder den Vorfluter abgelassen werden. Der Restgehalt an Quecksilber liegt dabei sicher unter 50 mg/m$^3$. Als ein zumindest brauchbares Fällungsmittel käme auch Na$_2$S infrage.

Beispiel 2

5 m$^3$ eines Hg(O)-haltigen Abwassers, das bereits vorgereinigt und frei von Schwebstoffen ist, werden auf pH 6 eingestellt, mit 100 ml einer 8 %igen KI-Lösung versetzt und 1 h lang mit 4 l 30 %iges H$_2$O$_2$ oxidiert. Wenn das bereits vorgereinigte Abwasser keine anderen oxidierbaren Stoffe mehr enthält, reicht die zugesetzte H$_2$O$_2$-Menge zur vollständigen Oxidation des an Hg(O) gesättigten Abwassers aus und braucht nicht automatisch ergänzt zu werden.

Nach Beendigung des Oxidationsvorganges wird das Abwasser durch eine mit Mangandioxid-Granulat gefüllte Säule gepumpt, die mit einem oben liegenden Entgasungsventil für Sauerstoff versehen ist. Danach wird das Quecksilber in einer Säule, die mit Hg-selektivem Ionenaustauscher gefüllt ist, fast vollständig aus dem Abwasser entfernt. Der Restgehalt an Quecksilber liegt danach typisch bei ca. 5 mg/ m$^3$.

Ein in diesem Fall geeigneter Ionenaustauscher auf der Basis eines Thiol-Harzes, eines Thioharnstoff-Harzes oder eines Isothiuronium-Harzeswird unter dem Handelsnamen "Imac TMR" von der Firma Akzo Zont Chemie Nederland bv vertrieben.

**Patentansprüche**

1. Verfahren zur Entgiftung von Abwässern, die elementares Quecksilber enthalten, durch Oxidation des Quecksilbers und nachfolgende Fällung als schwer lösliche Verbindung und/oder Extraktion des oxidierten Quecksilbers an einem Hg-selektiven Ionenaustauscher, dadurch gekennzeichnet, daß zur Oxidation des Quecksilbers Wasserstoffperoxid (H$_2$O$_2$) in Gegenwart eines Katalysators verwendet wird und dieser Katalysator aus einer Jodverbindung oder einer Eisenverbindung besteht.

2. Verfahren nach Anspruch 1, dadurch gekennzeichnet, daß das Abwasser als Katalysator eine anorganische Eisenverbindung in einer Menge von mindestens 1 g Fe/m$^3$ enthält und zur Oxidation mit Wasserstoffperoxid ein pH-Wert von 5 bis 10, vorzugsweise 7 bis 9 eingestellt wird.

3. Verfahren nach Anspruch 1, dadurch gekennzeichnet, daß dem Abwasser als Katalysator eine anorganische Jodverbindung, vorzugsweise ein Jodid, zugesetzt wird und zur Oxidation mit Wasserstoffperoxid ein pH-Wert unter 8,5 eingestellt wird.

4. Verfahren nach Anspruch 3, dadurch gekennzeichnet, daß die für 1 m$^3$ Abwasser vorgesehene Katalysatormenge, bezogen auf Jod, 0,1 g bis 5 g beträgt, welche in 1 l Wasser vorgelöst ist.

5. Verfahren nach einem der Ansprüche 1 bis 4, dadurch gekennzeichnet, daß der H$_2$O$_2$-Überschuß nach der Hg-Oxidation mit Mangandioxid katalytisch zersetzt wird.

**Revendications**

1. Procédé pour la détoxication d'eaux usées, qui contiennent du mercure élémentaire par oxydation de ce mercure et ensuite précipitation sous la forme d'une combinaison difficilement soluble et/ou extraction du mercure ainsi oxydé sur un échangeur d'ions sélectif pour le mercure, procédé caractérisé en ce que pour l'oxydation du mercure, ou utilise du peroxyde d'hydrogène (H$_2$O$_2$) en présence d'un catalyseur et que ce catalyseur est constitué d'un composé iodé ou bien d'un composé ferreux.

2. Procédé selon la revendication 1, caractérisé en ce que l'eau usée contient en tant que catalyseur, un composé ferreux inorganique en une quantité d'au moins 1 g Fe/m$^3$, et que pour l'oxydation avec le peroxyde d'hydrogène, on règle une valeur pH de 5 à 10, de préférence de 7 à 9.

3. Procédé selon la revendication 1, caractérisé en ce qu'on ajoute à l'eau usée comme catalyseur, un composé iodé inorganique, de préférence un iodure, et que pour l'oxydation avec le peroxyde d'hydrogène, on règle une valeur pH au-dessous de 8,5.

4. Procédé selon la revendication 3, caractérisé en ce que la quantité de catalyseur prévue pour 1 mètre cube d'eau usée, est, rapportée à l'iode, de 0,1 g à 5 g, cette quantité étant prédissoute dans 1 litre d'eau.

5. Procédé selon une des revendications 1 à 4, caractérisé en ce que l'excès de H$_2$O$_2$ après l'oxydation du mercure est décomposé catalytiquement avec du bioxyde de manganèse.

**Claims**

1. Method for the detoxication of waste waters, which contain elemental mercury, by oxidation of the mercury and subsequent precipitation as a not readily soluble compound and/or extraction of the oxidised mercury on an Hg-selective ion exchanger, characterised in that for the oxidation of the mercury, hydrogen peroxide (H$_2$O$_2$) is used in the presence of a catalyst and this catalyst consists of an iodine compound or an iron compound.

2. Method according to Claim 1, characterised in that as a catalyst, the waste water contains an inorganic iron compound in a quantity of at least 1 g Fe/m$^3$ and a pH-value of 5 to 10, preferably 7 to 9 is adjusted for oxidation with hydrogen peroxide.

3. Method according to Claim 1, characterised in that an inorganic iodine compound, preferably an iodide, is added as a catalyst to the waste water and a pH-value below 8.5 is adjusted for oxidation with hydrogen peroxide.

4. Method according to Claim 3, characterised in that the quantity of catalyst provided for 1 m$^3$ waste water, with respect to iodine, amounts to 0.1 g to 5 g, which is previously dissolved in 1 l water.

5. Method according to one of Claims 1 to 4, characterised in that after the Hg-oxidation, the H$_2$O$_2$-excess is decomposed catalytically with manganese dioxide.